# EUROPEAN PATENT SPECIFICATION

(11) **EP 4 428 607 B1**
(45) Date of publication and mention of the grant of the patent: **18.11.2026**
(21) Application number: 24161155.7
(22) Date of filing: 04.03.2024
(51) Int. Cl.: G02F 1/1523, G02F 1/153, G02F 1/157

(54) **VARIABLE EMISSIVITY ELECTROCHROMIC STRUCTURE**
ELEKTROCHROME STRUKTUR MIT VARIABLER EMISSIVITÄT
STRUCTURE ÉLECTROCHROME À ÉMISSIVITÉ VARIABLE

(30) Priority: 10.03.2023 CN 202310234232
(43) Date of publication of application: 11.09.2024
(73) Proprietor: Harbin Institute of Technology, Harbin 150080 (CN)
(72) Inventor: LI, Yao, Harbin 150080 (CN); ZHANG, Xiang, Harbin 150080 (CN); ZHANG, Hulin, Harbin 150080 (CN); ZHAO, Jiupeng, Harbin 150001 (CN)
(74) Representative: Meyer-Dulheuer MD Legal Patentanwälte PartG mbB

(56) References cited:
- US-A1- 2004 155 154
- ZOGRAFOPOULOS D C ET AL: "Amplitude modulation in infrared metamaterial absorbers based on electro-optically tunable conducting oxides", APPLIED PHYSICS A, SPRINGER BERLIN HEIDELBERG, BERLIN/HEIDELBERG, vol. 124, no. 2, 10 January 2018 (2018-01-10), XP036975213, ISSN: 0947-8396, [retrieved on 20180110], DOI: 10.1007/S00339-017-1506-0
- DEMIRYONT HULYA ET AL: "Emissivity modulating electro-chromic device", vol. 6939, 16 March 2008 (2008-03-16), Proceedings of SPIE, pages 69390N-1 - 69390N-8, XP093189552, Retrieved from the Internet <URL:https://dx.doi.org/10.1117/12.778249> DOI: 10.1117/12.778249

## Description

### TECHNICAL FIELD

The present application relates to the technical field of variable emissivity structures, in particular to a variable emissivity structure.

### BACKGROUND

Spacecrafts, such as satellites and spaceships, experience complex, changeable and extreme thermal environment (alternating in the range of about ±150 degrees Celsius). Therefore effective thermal management and control are crucial to maintain the internal temperature of the devices and payloads of the satellite within a safe range. In the vacuum of space, thermal radiation is the only way to dissipate heat from the surface of spacecraft. Therefore, how to adjust the outward thermal radiation of the spacecraft surface intelligently, actively and effectively has attracted much attention. Electrochromic technology offers a promising solution for active, continuous and accurate thermal management.
The traditional electrochromic (EC) structure usually consists of five thin films: two transparent conductive layers, an electrochromic layer, an electrolyte layer and a complementary ion storage layer. By applying voltage, ions are inserted and extracted from the EC layer, there is the reversible and visible change in transmittance and/or reflectance that is associated with an electrochemically induced oxidation-reduction reaction. It results from the generation of different visible region electronic absorption bands on switching between redox states. This change can extend to the mid and far- infrared bands, enabling the regulation of both visible and infrared spectrum simultaneously. However, challenges remain. For example, electrochromic structures usually exhibit color changes concurrent with modifications in IR emissivity, thus the structures have a higher absorption in the solar band when the EC layer is at its colored state, which result in insufficient heat disputation of on the solar irradiation surface of spacecraft, leading to the failure of efficient thermal control.

Therefore, in view of the above shortcomings, a novel variable emissivity electrochromic structure, which can achieve a) low solar absorption; b) visible transparent; c) decoupling of the dynamic regulation of IR emissivity and visible color; d) controllable IR emissivity in initial state, is urgently needed.
The article "Amplitude modulation in infrared metamaterial absorbers based on electro-optically tunable conducting oxides" discloses that a class of electro-optically tunable metamaterial absorbers is designed and investigated in the infrared regime towards realizing free-space amplitude modulators. The spacer between a subwavelength metallic stripe grating and a back metal reflector is occupied by a bilayer of indium tin oxide and hafnium oxide. The application of a bias voltage across the bilayer induces free-carrier accumulation at the HfO₂/TO interface, thereby locally modulating the permittivity of ITO and modifying the optical response of the absorber owing to the induced epsilon-near-zero (ENZ) effect. However, this article fails to disclose the distinguishing features in the characterizing part of claim 1. Further relevant prior art is found in the publication titled "Emissivity Modulating Electro-chromic Device" by H. Demiryont et al., Proc.of SPIE Vol. 6939, published in 2008.

### SUMMARY

An embodiment of the present application provides a variable emissivity structure with adjustable emissivity for the infrared band.

The embodiment of the present application provides a variable emissivity structure, which comprises a reflecting layer, an insulating layer and an adjusting layer, arranged sequentially along the thickness direction. The reflecting layer is used for reflecting infrared light, and a preparation material of the reflecting layer comprises a conductor or a semiconductor, and a preparation material of the adjusting layer comprises a conductor or a semiconductor with an infrared semi-transparent property. Both the reflecting layer and adjusting layer are connected to two electrodes of a power supply, with an adjustable voltage; and
an optical resonant cavity structure is formed between the adjusting layer and the reflecting layer, and the optical resonant cavity is used for regulating the absorption of infrared light; the infrared transmittance and absorption of the adjusting layer can be modulated by altering the voltage of the power supply. This adjustment allows for control over the amount of infrared light entering the optical resonant cavity structure, and thereby adjust an infrared emissivity of the variable emissivity structure; the insulating layer has a thickness of 150-1500 nm; the adjusting layer has a thickness of 45-1500 nm.

In a possible design, a preparation material of the reflecting layer comprises one of gold, silver, copper, iron, aluminum, indium tin oxide, fluorine-doped tin oxide, titanium oxide, zinc oxide, zinc-doped aluminum oxide or graphene, or a combination thereof;
a preparation material of the insulating layer comprises one of silicon oxide, silicon nitride, silicon carbide, tungsten oxide, aluminum oxide, nickel oxide, vanadium oxide, beryllium oxide, magnesium oxide, tantalum oxide, titanium oxide, cobalt oxide, zirconium oxide and yttrium oxide, or a combination thereof; and
a preparation material of the adjusting layer comprises one of indium tin oxide, fluorine-doped tin oxide, titanium oxide, zinc oxide, silver, zinc-doped aluminum oxide or graphene, or a combination thereof.

In a possible design, the reflecting layer has a thickness of 10-10000 nm, preferably 10-1500 nm;
In a possible design, the preparation material of the adjusting layer comprises a conductor or a semiconductor which has undergone a heat treatment.

In a possible design for better understanding the invention, the voltage applied to the adjusting layer by the power supply is from -5 to 0 V or from 0 to 5 V.

In a possible design, the reflecting layer has a thickness of 150-250 nm, the insulating layer has a thickness of 500-800 nm, and the adjusting layer has a thickness of 500-800 nm; and
when an anode of the power supply is connected to the adjusting layer to apply a positive bias, the infrared emissivity of the variable emissivity structure increases, and when a negative electrode of the power supply is connected to the adjusting layer to apply a negative bias, the infrared emissivity of the variable emissivity structure decreases.

In a possible design, the reflecting layer has a thickness of 150-250 nm, the insulating layer has a thickness of 150-250 nm, and the adjusting layer has a thickness of 45-80 nm; and
when the anode of the power supply is connected with the adjusting layer to apply a positive bias, the infrared emissivity of the variable emissivity structure decreases, and when the cathode of the power supply is connected with the adjusting layer to apply a negative bias, the infrared emissivity of the variable emissivity structure increases.

In a possible design, the reflecting layer is disposed on a substrate by coating treatment, the insulating layer is disposed on the reflecting layer by coating treatment, and the adjusting layer is disposed on the insulating layer by coating treatment; and
the substrate is a rigid substrate or an organic substrate.

In a possible design, the coating treatment comprises one of evaporation coating, sputtering coating and ion plating, or a combination thereof.

In a possible design, the heat treatment is carried out at a temperature of 10-600 degrees Celsius for a time of 10-600 minutes.

Compared with the prior art, the present application has at least the following beneficial effects:
the variable emissivity structure provided by the present application has three layers, namely a reflecting layer, an insulating layer and an adjusting layer along the thickness direction. Both the reflecting layer and the adjusting layer are conductive conductors or semiconductors. The reflecting layer has the property of reflecting infrared light, and the adjusting layer has the property of infrared translucency, which can reflect part of infrared light and allow part of infrared light to pass through. When infrared light is irradiated on the adjusting layer, part of the infrared light is reflected and part of the infrared light passes through the adjusting layer. The infrared light transmitted through the adjusting layer oscillates in the optical resonant cavity structure between the reflecting layer and the adjusting layer. The infrared emissivity of the variable emissivity structure can be obviously increased by the oscillation of the optical resonant cavity structure. Further, the reflecting layer and the adjusting layer are each connected to two electrodes of the power supply, respectively, and the carrier concentration in the adjusting layer can be controlled by adjusting the voltage of the power supply, influencing the infrared light transmittance of the adjusting layer. Therefore, adjusting the voltage of the power supply can alter the infrared light transmittance of the adjusting layer, and thus the intensity of infrared light entering the optical resonant cavity and its oscillation effect, thereby realizing the modulation of the structure's infrared emissivity, making it adaptable to varying conditions.

It should be noted that the infrared reflection property of the reflecting layer can be inherent to the material. This infrared reflection characteristic can be improved by subjecting the material to heat treatment, which enhances its conductivity (to exceed 1000 S/cm).

In the present application, the adjusting layer is connected to electrodes with different polarities to achieve varied effects. When the adjusting layer is connected to the cathode, the carrier concentration increases and the infrared transmittance of the adjusting layer can be reduced; when the adjusting layer is connected to the anode, the carrier concentration decreases, resulting in an increase in the infrared transmittance of the adjusting layer.

### BRIEF DESCRIPTION OF DRAWINGS

In order to more clearly explain the embodiments of the present invention or the technical solutions in the prior art, the drawings needed in the description of the embodiments or the prior art will be briefly introduced below. Obviously, the drawings in the following description are some embodiments of the present invention, and other drawings can be obtained according to these drawings without creative work for ordinary people in the field.
FIG. 1 is a schematic diagram of a variable emissivity structure provided by an embodiment of the present invention;
FIG. 2 is an infrared emissivity spectrum diagram of a variable emissivity structure provided by Embodiment 2 of the present invention;
FIG. 3 is an infrared emissivity spectrum diagram of a variable emissivity structure provided by Embodiment 3 of the present invention; and
FIG. 4 is an infrared emissivity spectrum diagram of a variable emissivity structure provided by Embodiment 7 of the present invention.

In the drawings:
1-Reflecting layer;
2-Insulating layer;
3- Regulating layer;
4- Power supply.

### DESCRIPTION OF EMBODIMENTS

In order to make the objects, technical solutions and advantages of the embodiment of the present invention more clearly, the technical solutions in the embodiment of the present invention will hereinafter be described clearly and completely with the attached drawings. Obviously, the described embodiments are a part of the embodiments of the present invention, but not all of the embodiments. Based on the embodiments of the present invention, all other embodiments obtained by those skilled in the art without creative labor belong to the scope of protection of the present invention.

In the description of embodiments of the present invention, unless otherwise specified and limited, the terms "first" and "second" are only used for descriptive purposes, and cannot be understood as indicating or implying relative importance. Unless otherwise prescribed or specified, the term "a plurality of" refers to two or more than two; the terms "connected" and "fixed" should be understood broadly. For example, the "connection" may be a fixed connection, a detachable connection, an integral connection or an electrical connection; it can be direct connection or indirect connection through an intermediary. For those skilled in the art, the specific meanings of the above terms in the present invention can be understood according to specific situations.

In the description of this specification, it should be understood that the directional words such as "above" and "below" described in the embodiment of the present invention are described from the angle shown in the attached drawings, and should not be understood as limiting the embodiment of the present invention. In addition, in this context, it should be understood that when an element is mentioned as being connected "above" or "below" another element, it can not only be directly "above" or "below" another element, but also indirectly connected "above" or "below" another element through an intermediate element.

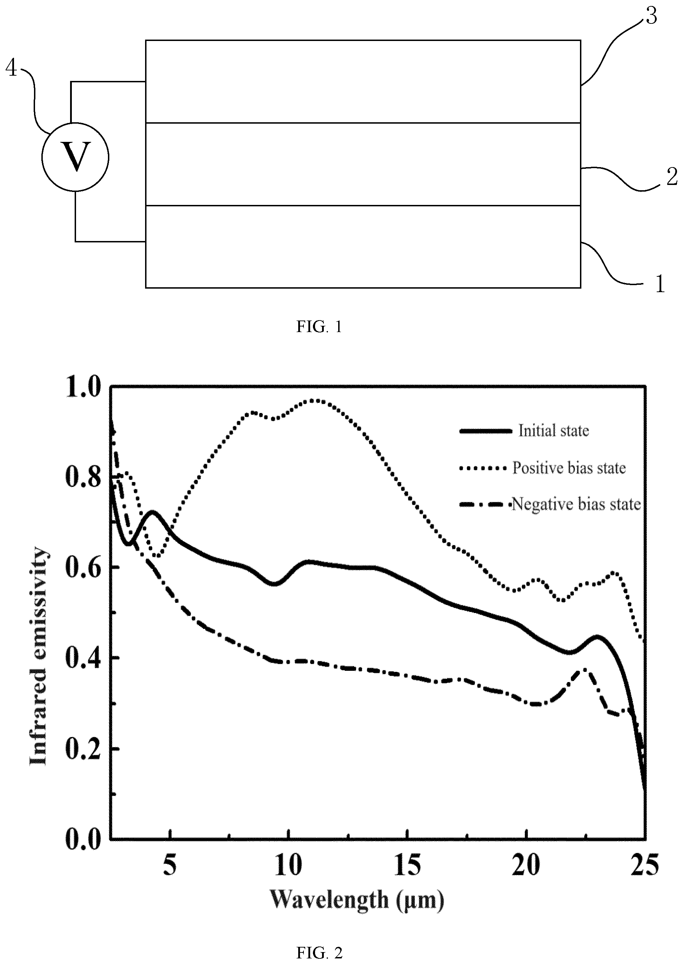

As shown in FIG. 1, an embodiment of the present invention provides a variable emissivity structure, which sequentially includes a reflecting layer 1, an insulating layer 2 and an adjusting layer 3 along the thickness direction, wherein the reflecting layer 1 is used for reflecting infrared light; the preparation material of the reflecting layer 1 includes a conductor or a semiconductor, and the preparation material of the adjusting layer 3 includes a conductor or a semiconductor with infrared semitransparent property; and the reflecting layer 1 and the adjusting layer 3 are respectively connected with two electrodes of a power supply 4, and the electrode voltage can be adjusted;
An optical resonant cavity structure is formed between the adjusting layer 3 and the reflecting layer 1, and the optical resonant cavity is used for adjusting the absorption of infrared light. The infrared transmittance and absorption rate of the adjusting layer 3 are changed by adjusting the voltage of the power supply 4, so as to adjust the amount of infrared light entering the optical resonant cavity structure, and further adjust the infrared emissivity of the variable emissivity structure.

The variable emissivity structure provided by the present application has three layers, namely a reflecting layer 1, an insulating layer 2 and an adjusting layer 3 along the thickness direction. Both the reflecting layer 1 and the adjusting layer 3 are conductive conductors or semiconductors. The reflecting layer 1 has the property of reflecting infrared light, and the adjusting layer 3 has the property of infrared translucency, which can reflect part of infrared light and allow part of infrared light to pass through. When infrared light is irradiated on the adjusting layer 3, part of the infrared light is reflected and part of the infrared light passes through the adjusting layer 3. The infrared light transmitted through the adjusting layer 3 oscillates in the optical resonant cavity structure between the reflecting layer 1 and the adjusting layer 3. The infrared emissivity of the variable emissivity structure can be obviously increased by the oscillation of the optical resonant cavity structure. Further, the reflecting layer 1 and the adjusting layer 3 are connected with two electrodes of the power supply 4 respectively, and the carrier concentration in the adjusting layer 3 is controlled by adjusting the voltage of the power supply 4, and the carrier concentration affects the infrared light transmittance of the adjusting layer 3. Therefore, the infrared light transmittance of the adjusting layer 3 can be changed by adjusting the voltage of the power supply 4, so as to adjust the infrared light intensity entering the optical resonant cavity and the oscillation effect of the optical resonant cavity, thereby realizing the effect that the infrared light emissivity is adjustable.

It should be noted that the infrared reflection property of the reflecting layer 1 can come from the material itself. Also, the reflecting layer 1 can be heat-treated to improve its conductivity (more than 1000 S/cm) to make it have infrared reflection property.

The emissivity control of the variable emissivity structure is related to the following four factors: a. the infrared semi-transmission performance of the adjusting layer; b. the thickness of the adjusting layer; c. the thickness of the resonant cavity; d. the carrier concentration of the adjusting layer. In the present invention, the adjusting layer 3 is connected with electrodes with different polarities to obtain different effects. When the adjusting layer 3 is connected with the cathode, the carrier concentration can be increased and the infrared transmittance of the adjusting layer 3 can be reduced; when the adjusting layer 3 is connected to the anode, the carrier concentration can be reduced and the infrared transmittance of the adjusting layer 3 can be increased.

In some embodiments of the present invention, the preparation material of the reflecting layer 1 includes one of gold, silver, copper, iron, aluminum, indium tin oxide, fluorine-doped tin oxide, titanium oxide, zinc oxide, zinc-doped aluminum oxide or graphene, or a combination thereof.

The insulating layer 2 is made of one of silicon oxide, silicon nitride, silicon carbide, tungsten oxide, aluminum oxide, nickel oxide, vanadium oxide, beryllium oxide, magnesium oxide, tantalum oxide, titanium oxide, cobalt oxide, zirconium oxide and yttrium oxide, or a combination thereof.

The preparation material of the adjusting layer 3 includes one of indium tin oxide, fluorine-doped tin oxide, titanium oxide, zinc oxide, silver, zinc-doped aluminum oxide or graphene, or a combination thereof.

In this embodiment, the reflecting layer 1 can be made of visible light-opaque materials, such as gold, copper, iron, and aluminum, so as to both reflect visible light and adjust the infrared emissivity of the variable emissivity structure. The reflecting layer 1 can also be made of visible light-transparent materials, such as indium tin oxide (ITO), silver (Ag), ITO/Ag/ITO, fluorine-doped tin oxide (FTO), titanium oxide, zinc oxide, Zinc-doped aluminum oxide or grapheme. This allows the layer to both transmit visible light and modulate the infrared emissivity of the variable emissivity structure.

In the embodiment, the adjusting layer 3 is a material whose carrier concentration changes with the voltage. Specifically, after the structure is determined and the electrodes are connected, a voltage is applied, and the electron injection/extraction causes the change of the carrier concentration of the material.

In some embodiments of the present invention, the thickness of the reflecting layer 1 is 10-10000 nm, preferably 10-1500 nm;
the thickness of the insulating layer 2 is 150-1500nm; and
the thickness of the adjusting layer 3 is 45-1500nm.

In this embodiment, the thickness of the adjusting layer 3 will affect the infrared transmittance of the adjusting layer 3 itself, and the transmittance of the adjusting layer 3 will affect the oscillation effect of the optical resonant cavity. The thickness of the insulating layer 2 will affect the effect of the optical resonant cavity structure, and both even directly determine whether the optical resonant cavity can be formed. Preferably, the thickness of the insulating layer 2 is 450-800 nm, and the thickness of the adjusting layer 3 is 45-800 nm.

In some embodiments of the present invention, the preparation material of the adjusting layer 3 includes a conductor or a semiconductor which has undergone a heat treatment.

In this embodiment, variable emissivity structures with different initial states can be prepared according to actual needs. The initial state is a state of the infrared emissivity when no voltage is applied. Without heat treatment, the initial emissivity is a high mission state (0.81), and it is a low mission state (0.39) when negative bias is applied. After heat treatment, the initial state is a low emission state (0.5), and it is a high emission state (0.81) after applying positive bias. The variable emissivity structure provided by the present application has an emissivity regulation range of more than 0.42, a response time of less than 30 seconds and a solar absorption rate of less than 0.28, where the solar absorption is obtained by integrating the standard spectra of the earth's surface (AM1.5, 0.25-2.5 µm band). It should be noted that the above emissivity value is the integrated emissivity, which is obtained by integrating blackbody radiation (2.5-25 µm band).

In some embodiments of the present invention, the voltage applied to the adjusting layer 3 by the power supply 4 is from -5 to 0 V or from 0 to 5 V.

In this embodiment, since the oscillation adjustment function of infrared light mainly comes from the optical resonant cavity, only a low voltage is needed to change the infrared transmittance of the adjusting layer 3. Preferably, the voltage applied to the adjusting layer 3 by the power supply 4 is from -3 to 0 V or from 0 to 3 V.

In some embodiments of the present invention, the thickness of the reflecting layer 1 is 150-250 nm, the thickness of the insulating layer 2 is 500-800 nm, and the thickness of the adjusting layer 3 is 500-800 nm; and
the infrared emissivity of the variable emissivity structure increases when the anode of the power supply 4 is connected with the adjusting layer 3 to apply a positive bias, and decreases when cathode of the power supply 4 is connected with the adjusting layer 3 to apply a negative bias.

In this embodiment, the thickness of the adjusting layer 3 is relatively thick, and the infrared transmittance in the initial state is relatively low. At this time, the positive bias is applied to extract electrons to reduce the carrier concentration, and the infrared transmittance of the adjusting layer 3 is increased. The stronger the infrared light entering the optical resonant cavity, the higher the infrared emissivity; when negative bias is applied to charge electrons to increase the carrier concentration, the infrared reflectivity of the adjusting layer 3 increases, and the weaker the infrared light entering the optical resonant cavity, the lower the infrared emissivity.

In some embodiments of the present invention, the thickness of the reflecting layer 1 is 150-250 nm, the thickness of the insulating layer 2 is 150-250 nm, and the thickness of the adjusting layer 3 is 45-80 nm; and
the infrared emissivity of the variable emissivity structure decreases when the anode of the power supply 4 is connected with the adjusting layer 3 to apply a positive bias, and increases when the cathode of the power supply 4 is connected with the adjusting layer 3 to apply a negative bias.

In this embodiment, the thickness of the adjusting layer 3 is relatively thin, and the infrared transmittance in the initial state is relatively high. At this time, most of the infrared light in the initial state passes through the adjusting layer, and the infrared light is mainly reflected by the reflecting layer. Positive bias is applied and electrons are extracted to reduce the carrier concentration, which further increases the infrared transmittance of the adjusting layer 3 and affects the infrared oscillation effect of the optical resonant cavity. Most infrared light is directly reflected by the reflecting layer 1, which reduces the infrared emissivity. Negative bias is applied and electrons are injected to increase the carrier concentration, which increases the infrared reflectivity of the adjusting layer 3 and in turn increases the infrared oscillation of the optical resonant cavity and the infrared emissivity.

In some embodiments of the present invention, the reflecting layer 1 is disposed on the substrate by coating treatment, the insulating layer 2 is disposed on the reflecting layer 1 by coating treatment, and the adjusting layer 3 is disposed on the insulating layer 2 by coating treatment; and
the substrate is a rigid substrate or an organic substrate.

In this embodiment, the substrate can be a rigid substrate, such as glass, quartz, copper foil, aluminum sheet and silicon wafer; the substrate can also be an organic substrate, such as polyethylene terephthalate (PET), polydimethylsiloxane (PDMS), polyimide (PI), polyethylene, polypropylene, polycarbonate (PC), polyurethane and organic silicone resin.

In some embodiments of the present invention, the coating treatment includes one of evaporation coating, sputtering coating and ion plating, or a combination thereof.

In some embodiments of the present invention, the temperature of heat treatment is 10-600 degrees Celsius and the time is 10-600 minutes.

### Embodiment 1

A variable emissivity structure is prepared on a substrate, which is generally any rigid substrate such as glass, quartz, copper foil, aluminum sheet, silicon wafer or organic substrate such as polyethylene terephthalate (PET), polydimethylsiloxane (PDMS), polyimide (PI), polyethylene, polypropylene, polycarbonate (PC), polyurethane and organic silicone resin. Its film structure includes at least three film layers from bottom to top: a first substrate; a reflecting layer 1 disposed on the upper side of the first substrate; an insulating layer 2 disposed on the upper side of the reflecting layer 1; and an adjusting layer 3 arranged on the upper side of the insulating layer 2.

The preparation method of the structural film layers is prepared by film coating, including one of evaporation coating, sputtering coating and ion plating, or a combination thereof.

The reflecting layer 1 is made of a conductive material, for example one of gold, silver, copper, iron, aluminum, indium tin oxide (ITO), fluorine-doped tin oxide (FTO), titanium oxide, zinc oxide, zinc-doped aluminum oxide or graphene, or a combination thereof, and has a thickness of 10-10000 nm, preferably 10-1500 nm.

The insulating layer 2 can be composed of single-layer or multi-layer films; the material is generally one or more of silicon oxide, silicon nitride, silicon carbide, tungsten oxide, aluminum oxide, nickel oxide, vanadium oxide, beryllium oxide, magnesium oxide, tantalum oxide, titanium oxide, cobalt oxide, zirconium oxide and yttrium oxide, or composite oxides thereof; and the insulating layer 2 has a thickness of 10-5000nm, preferably 10-1500 nm.

The adjusting layer 3 is made of a semiconductor material, for example one of indium tin oxide (ITO), fluorine-doped tin oxide (FTO), titanium oxide, zinc oxide, ITO/Ag/ITO, silver, zinc-doped aluminum oxide or graphene or a combination thereof, and has a thickness of 10-5000 nm, preferably 10-1500 nm.

Two thin copper foils are adhered to the surfaces of the reflecting layer 1 and the adjusting layer 3 by means of a conductive adhesive, respectively, as the counter electrode and the working electrode of the variable emissivity structure.

A safe, reliable and novel variable emissivity structure can be obtained, and heat treatment can be carried out to optimize the color-changing function. The heat treatment can be carried out in vacuum, atmosphere or other atmospheres. The temperature of heat treatment is 10-600 degrees Celsius and the time is 10-600 minutes.

### Embodiment 2

A variable emissivity structure is prepared on a glass substrate;
the structure is prepared by electron beam evaporation coating technology;
the reflecting layer 1 is made of indium tin oxide and has a thickness of 200 nm;
the insulating layer 2 is made of silicon dioxide and has a thickness of 550 nm;
the adjusting layer 3 is made of indium tin oxide and has a thickness of 600 nm; and
after the preparation of a variable emissivity structure is completed, it is heat-treated in atmospheric atmosphere at 300 degrees Celsius for 120 minutes.

Two thin copper foils are adhered to the surfaces of the reflecting layer 1 and the adjusting layer 3 by means of a conductive adhesive, respectively, as the counter electrode and the working electrode of the variable emissivity structure. A safe, reliable and novel variable emissivity structure can be obtained. FIG. 2 is an infrared emissivity spectrum diagram of a variable emissivity structure provided by Embodiment 2 of the present invention.

### Embodiment 3

A variable emissivity structure is prepared on a glass substrate;
the structure is prepared by electron beam evaporation coating technology;
a reflecting layer 1 is made of indium tin oxide and has a thickness of 200 nm;
an insulating layer 2 is made of silicon dioxide and has a thickness of 550 nm;
an adjusting layer 3 is made of indium tin oxide and has a thickness of 600 nm; and
after the preparation of a variable emissivity structure is completed, no heat treatment is carried out.

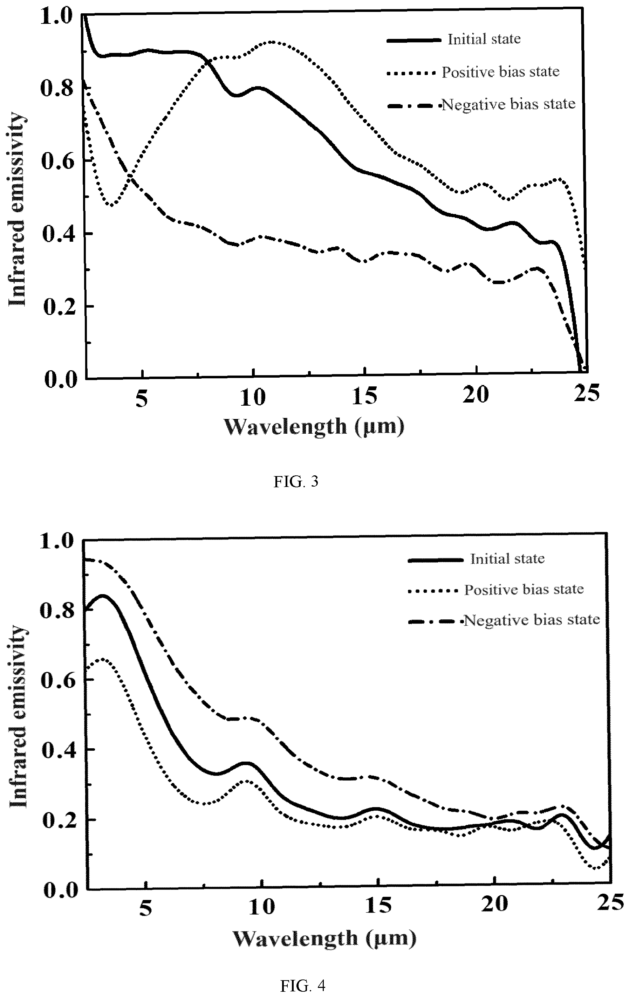

Two thin copper foils are adhered to the surfaces of the reflecting layer 1 and the adjusting layer 3 by means of a conductive adhesive, respectively, as the counter electrode and the working electrode of the variable emissivity structure. Compared with Embodiment 2, Embodiment 2 is an infrared emissivity structure that the initial state is a low emission state; Embodiment 3 is an infrared emissivity structure that the initial state is a high emission state. FIG. 3 is an infrared emissivity spectrum diagram of a variable emissivity structure provided by Embodiment 3 of the present invention.

### Embodiment 4

A variable emissivity structure is prepared on a glass substrate;
the structure is prepared by electron beam evaporation coating technology;
a reflecting layer 1 is made of indium tin oxide and aluminum, with thicknesses of 200 nm and 180 nm respectively;
an insulating layer 2 is made of silicon dioxide and has a thickness of 550 nm;
an adjusting layer 3 is made of indium tin oxide and has a thickness of 600 nm; and
after the preparation of a variable emissivity structure is completed, it is heat-treated in atmospheric atmosphere at 300 degrees Celsius for 120 minutes.

Two thin copper foils are adhered to the surfaces of the reflecting layer 1 and the adjusting layer 3 by means of a conductive adhesive, respectively, as the counter electrode and the working electrode of the variable emissivity structure. Compared with Embodiment 2, Embodiment 2 is an infrared emissivity structure in which the visible-light band is transmissive; Embodiment 4 is an infrared emissivity structure in which the visible-light band is reflective.

### Embodiment 5

A variable emissivity structure is prepared on an aluminum sheet, which serves as both a substrate and a reflecting layer 1;
an insulating layer 2 is made of silicon dioxide and has a thickness of 550 nm;
an adjusting layer 3 is made of indium tin oxide and has a thickness of 600 nm; and
after the preparation of a variable emissivity structure is completed, it is heat-treated in atmospheric atmosphere at 300 degrees Celsius for 120 minutes.

Two thin copper foils are adhered to the surfaces of the reflecting layer 1 and the adjusting layer 3 by means of a conductive adhesive, respectively, as the counter electrode and the working electrode of the variable emissivity structure. A safe, reliable and novel variable emissivity structure can be obtained.

### Embodiment 6

A variable emissivity structure is prepared on a glass substrate;
the structure is prepared by electron beam evaporation coating technology;
a reflecting layer 1 is made of indium tin oxide with a thickness of 200 nm;
an insulating layer 2 is made of silicon dioxide with a thickness of 200 nm;
an adjusting layer 3 is made of indium tin oxide with a thickness of 50 nm; and
after the preparation of a variable emissivity structure is completed, it is heat-treated in atmospheric atmosphere at 300 degrees Celsius for 120 minutes.

Two thin copper foils are adhered to the surfaces of the reflecting layer 1 and the adjusting layer 3 by means of a conductive adhesive, respectively, as the counter electrode and the working electrode of the variable emissivity structure. A safe, reliable and novel variable emissivity structure can be obtained.

### Embodiment 7

A variable emissivity structure is prepared on a glass substrate;
the structure is prepared by magnetron sputtering evaporation coating technology;
a reflecting layer 1 is made of indium tin oxide with a thickness of 200 nm;
an insulating layer 2 is made of silicon dioxide and tungsten oxide, with thicknesses of 300 nm and 300 nm respectively;
an adjusting layer 3 is made of indium tin oxide with a thickness of 500 nm; and
after the preparation of a variable emissivity structure is completed, it is heat-treated in atmospheric atmosphere at 300 degrees Celsius for 120 minutes.

Two thin copper foils are adhered to the surfaces of the reflecting layer 1 and the adjusting layer 3 by means of a conductive adhesive, respectively, as the counter electrode and the working electrode of the variable emissivity structure. Compared with Embodiment 2, the emissivity of the structure increases when a positive bias is applied and decreases when a negative bias is applied in Embodiment 2. In Embodiment 7, the emissivity of the structure decreases when a positive bias is applied and increases when a negative bias is applied. FIG. 4 is an infrared emissivity spectrum diagram of a variable emissivity structure provided by Embodiment 7 of the present invention.

Finally, it should be explained that the above embodiments are only used to illustrate the technical solutions of the present invention, but not to limit the scope of the present invention to them. Although the present invention has been described in detail with reference to the foregoing embodiments, those skilled in the art should understand that it is still possible to modify the technical solutions described in the foregoing embodiments, or to replace some technical features with equivalents. However, these modifications or substitutions are meant to be encompassed by the appended claims.

## Claims

1. A variable emissivity structure, sequentially comprising a reflecting layer (1), an insulating layer (2) and an adjusting layer (3) along a thickness direction, wherein the reflecting layer is used for reflecting infrared light, and a preparation material of the reflecting layer comprises a conductor or a semiconductor, and a preparation material of the adjusting layer comprises a conductor or a semiconductor with an infrared semitransparent property; and the reflecting layer and the adjusting layer are respectively connected with two electrodes of a power supply (4), and a voltage of the electrodes is adjustable; and **characterised in that**
an optical resonant cavity structure is formed between the adjusting layer and the reflecting layer, and the optical resonant cavity is used for adjusting the absorption of infrared light; an infrared transmittance and an absorption rate of the adjusting layer are changed by adjusting the voltage of the power supply, so as to adjust an amount of infrared light entering the optical resonant cavity structure, and further adjust an infrared emissivity of the variable emissivity structure,
wherein
the insulating layer has a thickness of 150-1500 nm; and
the adjusting layer has a thickness of 45-1500 nm.

2. The variable emissivity structure according to claim 1, wherein a preparation material of the reflecting layer comprises one of gold, silver, copper, iron, aluminum, indium tin oxide, fluorine-doped tin oxide, titanium oxide, zinc oxide, zinc-doped aluminum oxide or graphene, or a combination thereof;
a preparation material of the insulating layer comprises one of silicon oxide, silicon nitride, silicon carbide, tungsten oxide, aluminum oxide, nickel oxide, vanadium oxide, beryllium oxide, magnesium oxide, tantalum oxide, titanium oxide, cobalt oxide, zirconium oxide and yttrium oxide, or a combination thereof; and
a preparation material of the adjusting layer comprises one of indium tin oxide, fluorine-doped tin oxide, titanium oxide, zinc oxide, silver, zinc-doped aluminum oxide or graphene, or a combination thereof.

3. The variable emissivity structure according to claim **1,** wherein the reflecting layer has a thickness of 10-1500 nm.

4. The variable emissivity structure according to claim **1,** wherein the preparation material of the adjusting layer comprises a conductor or a semiconductor which has undergone a heat treatment.

5. The variable emissivity structure according to claim **1,** wherein the reflecting layer has a thickness of 150-250 nm, the insulating layer has a thickness of 500-800 nm, and the adjusting layer has a thickness of 500-800 nm; and
when an anode of the power supply is connected with the adjusting layer to apply a positive bias, the infrared emissivity of the variable emissivity structure increases, and when a cathode of the power supply is connected with the adjusting layer to apply a negative bias, the infrared emissivity of the variable emissivity structure decreases.

6. The variable emissivity structure according to claim **1,** wherein the reflecting layer has a thickness of 150-250 nm, the insulating layer has a thickness of 150-250 nm, and the adjusting layer has a thickness of 45-80 nm; and
when an anode of the power supply is connected with the adjusting layer to apply a positive bias, the infrared emissivity of the variable emissivity structure decreases, and when a cathode of the power supply is connected with the adjusting layer to apply a negative bias, the infrared emissivity of the variable emissivity structure increases.

7. The variable emissivity structure according to claim **1,** wherein the reflecting layer is disposed on a substrate by coating treatment, the insulating layer is disposed on the reflecting layer by coating treatment, and the adjusting layer is disposed on the insulating layer by coating treatment; and
the substrate is a rigid substrate or an organic substrate.

8. The variable emissivity structure according to claim 7, wherein the coating treatment comprises one of evaporation coating, sputtering coating and ion plating, or a combination thereof.

9. The variable emissivity structure according to claim 4, wherein the heat treatment is carried out at a temperature of 300-600 degrees Celsius for a time of 10-600 minutes.

10. A method of application of a voltage to the variable emissivity structure of any of claims 1-9, wherein the voltage is applied by the power supply to the adjusting layer and to the reflecting layer and has a range from -5 V to 0 V or from 0 V to 5 V.

## Patentansprüche

1. Struktur mit variabler Emissivität, die entlang einer Dickenrichtung nacheinander eine reflektierende Schicht (1), eine isolierende Schicht (2) und eine Einstellschicht (3) umfasst, wobei die reflektierende Schicht zum Reflektieren von Infrarotlicht dient und ein Ausgangsmaterial der reflektierenden Schicht einen Leiter oder einen Halbleiter umfasst, und ein Ausgangsmaterial der Einstellschicht einen Leiter oder einen Halbleiter mit einer infrarotdurchlässigen Eigenschaft umfasst; und die reflektierende Schicht und die Einstellschicht jeweils mit zwei Elektroden einer Stromversorgung (4) verbunden sind und die Spannung an den Elektroden einstellbar ist; und **dadurch gekennzeichnet, dass**
zwischen der Einstellschicht und der reflektierenden Schicht eine optische Resonatorstruktur ausgebildet ist und der optische Resonator zur Einstellung der Absorption von Infrarotlicht dient; die Infrarotdurchlässigkeit und die Absorptionsrate der Einstellschicht durch Einstellen der Spannung der Stromversorgung verändert werden, um die in die optische Resonatorstruktur eintretende Infrarotlichtmenge einzustellen und ferner die Infrarotemissivität der Struktur mit variabler Emissivität einzustellen,
wobei
die Isolierschicht eine Dicke von 150-1500 nm aufweist; und
die Einstellschicht eine Dicke von 45-1500 nm aufweist.

2. Struktur mit variabler Emissivität nach Anspruch 1, wobei ein Ausgangsmaterial der reflektierenden Schicht eines der folgenden Materialien umfasst: Gold, Silber, Kupfer, Eisen, Aluminium, Indium-Zinn-Oxid, fluordotiertes Zinnoxid, Titanoxid, Zinkoxid, zinkdotiertes Aluminiumoxid oder Graphen, oder eine Kombination davon;
ein Ausgangsmaterial der Isolierschicht eines der folgenden Materialien umfasst: Siliziumoxid, Siliziumnitrid, Siliziumkarbid, Wolframoxid, Aluminiumoxid, Nickeloxid, Vanadiumoxid, Berylliumoxid, Magnesiumoxid, Tantaloxid, Titanoxid, Kobaltoxid, Zirkonoxid und Yttriumoxid oder eine Kombination davon; und
ein Herstellungsmaterial der Einstellschicht umfasst eines der folgenden: Indiumzinnoxid, fluordotiertes Zinnoxid, Titanoxid, Zinkoxid, Silber, zinkdotiertes Aluminiumoxid oder Graphen oder eine Kombination davon.

3. Struktur mit variabler Emissivität nach Anspruch 1, wobei die Reflexionsschicht eine Dicke von 10-1500 nm aufweist.

4. Struktur mit variabler Emissivität nach Anspruch 1, wobei das Herstellungsmaterial der Einstellschicht einen Leiter oder einen Halbleiter umfasst, der einer Wärmebehandlung unterzogen wurde.

5. Struktur mit variabler Emissivität nach Anspruch 1, wobei die reflektierende Schicht eine Dicke von 150-250 nm aufweist, die isolierende Schicht eine Dicke von 500-800 nm aufweist und die Einstellschicht eine Dicke von 500-800 nm aufweist; und
wenn eine Anode der Stromversorgung mit der Einstellschicht verbunden wird, um eine positive Vorspannung anzulegen, steigt die Infrarot-Emissionsgrad der Struktur mit variablem Emissionsgrad an, und wenn eine Kathode der Stromversorgung mit der Einstellschicht verbunden wird, um eine negative Vorspannung anzulegen, sinkt der Infrarot-Emissionsgrad der Struktur mit variablem Emissionsgrad.

6. Struktur mit variabler Emissivität nach Anspruch 1, wobei die Reflexionsschicht eine Dicke von 150-250 nm aufweist, die Isolierschicht eine Dicke von 150-250 nm aufweist und die Einstellschicht eine Dicke von 45-80 nm aufweist; und
wenn eine Anode der Stromversorgung mit der Einstellschicht verbunden wird, um eine positive Vorspannung anzulegen, nimmt die Infrarot-Emissionsrate der Struktur mit variabler Emissionsrate ab, und wenn eine Kathode der Stromversorgung mit der Einstellschicht verbunden wird, um eine negative Vorspannung anzulegen, nimmt die Infrarot-Emissionsrate der Struktur mit variabler Emissionsrate zu.

7. Struktur mit variabler Emissivität nach Anspruch 1, wobei die Reflexionsschicht durch Beschichtung auf einem Substrat aufgebracht ist, die Isolierschicht durch Beschichtung auf der Reflexionsschicht aufgebracht ist und die Einstellschicht durch Beschichtung auf der Isolierschicht aufgebracht ist; und
das Substrat ein starres Substrat oder ein organisches Substrat ist.

8. Struktur mit variabler Emissivität nach Anspruch 7, wobei das Beschichtungsverfahren eine der folgenden Verfahren umfasst: Verdampfungsbeschichtung, Sputterbeschichtung und Ionenplattierung oder eine Kombination davon.

9. Struktur mit variabler Emissivität nach Anspruch 4, wobei die Wärmebehandlung bei einer Temperatur von 300 bis 600 Grad Celsius über einen Zeitraum von 10 bis 600 Minuten durchgeführt wird.

10. Verfahren zum Anlegen einer Spannung an die Struktur mit variabler Emissivität gemäß einem der Ansprüche 1 bis 9, wobei die Spannung von der Stromversorgung an die Einstellschicht und an die Reflexionsschicht angelegt wird und einen Bereich von -5 V bis 0 V oder von 0 V bis 5 V aufweist.

## Revendications

1. Structure à émissivité variable, comprenant successivement, dans le sens de l'épaisseur, une couche réfléchissante (1), une couche isolante (2) et une couche d'ajustement (3), dans laquelle la couche réfléchissante est utilisée pour réfléchir la lumière infrarouge, et le matériau de composition de la couche réfléchissante comprend un conducteur ou un semi-conducteur, et le matériau de composition de la couche d'ajustement comprend un conducteur ou un semi-conducteur présentant une propriété de semi-transparence aux infrarouges ; et la couche réfléchissante et la couche d'ajustement sont respectivement reliées à deux électrodes d'une alimentation électrique (4), et la tension des électrodes est réglable ; et **caractérisée en ce que**
une structure de cavité résonante optique est formée entre la couche d'ajustement et la couche réfléchissante, et la cavité résonante optique est utilisée pour ajuster l'absorption de la lumière infrarouge ; la transmittance infrarouge et le taux d'absorption de la couche d'ajustement sont modifiés en ajustant la tension de la source d'alimentation, de manière à ajuster la quantité de lumière infrarouge pénétrant dans la structure de cavité résonante optique, et à ajuster en outre l'émissivité infrarouge de la structure à émissivité variable,
dans laquelle
la couche isolante a une épaisseur comprise entre 150 et 1 500 nm ; et
la couche de réglage a une épaisseur comprise entre 45 et 1 500 nm.

2. Structure à émissivité variable selon la revendication 1, dans laquelle un matériau de fabrication de la couche réfléchissante comprend l'un des éléments suivants : or, argent, cuivre, fer, aluminium, oxyde d'indium-étain, oxyde d'étain dopé au fluor, oxyde de titane, oxyde de zinc, oxyde d'aluminium dopé au zinc ou graphène, ou une combinaison de ceux-ci ;
un matériau de composition de la couche isolante comprend l'un des éléments suivants : oxyde de silicium, nitrure de silicium, carbure de silicium, oxyde de tungstène, oxyde d'aluminium, oxyde de nickel, oxyde de vanadium, oxyde de béryllium, oxyde de magnésium, oxyde de tantale, oxyde de titane, oxyde de cobalt, oxyde de zirconium et oxyde d'yttrium, ou une combinaison de ceux-ci ; et
un matériau de composition de la couche de réglage comprend l'un parmi l'oxyde d'indium-étain, l'oxyde d'étain dopé au fluor, l'oxyde de titane, l'oxyde de zinc, l'argent, l'oxyde d'aluminium dopé au zinc ou le graphène, ou une combinaison de ceux-ci.

3. Structure à émissivité variable selon la revendication 1, dans laquelle la couche réfléchissante présente une épaisseur comprise entre 10 et 1 500 nm.

4. Structure à émissivité variable selon la revendication 1, dans laquelle le matériau de composition de la couche d'ajustement comprend un conducteur ou un semi-conducteur ayant subi un traitement thermique.

5. Structure à émissivité variable selon la revendication 1, dans laquelle la couche réfléchissante a une épaisseur comprise entre 150 et 250 nm, la couche isolante a une épaisseur comprise entre 500 et 800 nm, et la couche de réglage a une épaisseur comprise entre 500 et 800 nm ; et
lorsqu'une anode de la source d'alimentation est connectée à la couche de réglage pour appliquer une polarisation positive, l'émissivité infrarouge de la structure à émissivité variable augmente, et lorsqu'une cathode de la source d'alimentation est connectée à la couche de réglage pour appliquer une polarisation négative, l'émissivité infrarouge de la structure à émissivité variable diminue.

6. Structure à émissivité variable selon la revendication 1, dans laquelle la couche réfléchissante a une épaisseur comprise entre 150 et 250 nm, la couche isolante a une épaisseur comprise entre 150 et 250 nm, et la couche de réglage a une épaisseur comprise entre 45 et 80 nm ; et
lorsqu'une anode de la source d'alimentation est connectée à la couche de réglage pour appliquer une polarisation positive, l'émissivité infrarouge de la structure à émissivité variable diminue, et lorsqu'une cathode de la source d'alimentation est connectée à la couche de réglage pour appliquer une polarisation négative, l'émissivité infrarouge de la structure à émissivité variable augmente.

7. Structure à émissivité variable selon la revendication 1, dans laquelle la couche réfléchissante est disposée sur un substrat par un traitement de revêtement, la couche isolante est disposée sur la couche réfléchissante par un traitement de revêtement, et la couche de réglage est disposée sur la couche isolante par un traitement de revêtement ; et
le substrat est un substrat rigide ou un substrat organique.

8. Structure à émissivité variable selon la revendication 7, dans laquelle le traitement de revêtement comprend l'un parmi le revêtement par évaporation, le revêtement par pulvérisation cathodique et le placage ionique, ou une combinaison de ceux-ci.

9. Structure à émissivité variable selon la revendication 4, dans laquelle le traitement thermique est effectué à une température comprise entre 300 et 600 degrés Celsius pendant une durée de 10 à 600 minutes.

10. Procédé d'application d'une tension à la structure à émissivité variable selon l'une quelconque des revendications 1 à 9, dans lequel la tension est appliquée par la source d'alimentation à la couche de réglage et à la couche réfléchissante, et est comprise entre -5 V et 0 V ou entre 0 V et 5 V.
